# EUROPÄISCHE PATENTSCHRIFT

(11) **EP 4 028 294 B1**
(45) Veröffentlichungstag und Bekanntmachung des Hinweises auf die Patenterteilung: **10.07.2024**
(21) Anmeldenummer: 20771252.2
(22) Anmeldetag: 08.09.2020
(51) Int. Cl.: B60T 8/172, B60W 40/068

(54) **VORRICHTUNG UND VERFAHREN ZUM SCHÄTZEN EINES STRASSENREIBUNGSKOEFFIZIENTEN**
DEVICE AND METHOD FOR ESTIMATING A COEFFICIENT OF FRICTION OF A ROAD
DISPOSITIF ET PROCÉDÉ D'ESTIMATION D'UN COEFFICIENT DE FROTTEMENT D'UNE ROUTE

(30) Priorität: 12.09.2019 DE 102019213911
(43) Veröffentlichungstag der Anmeldung: 20.07.2022
(73) Patentinhaber: thyssenkrupp Presta AG, 9492 Eschen (LI); thyssenkrupp AG, 45143 Essen (DE)
(72) Erfinder: LAPIS, Leonard, 9466 Sennwald (CH)
(74) Vertreter: thyssenkrupp Intellectual Property GmbH
(86) Internationale Anmeldenummer: PCT/EP2020/075106
(87) Internationale Veröffentlichungsnummer: WO 2021/048144

(56) Entgegenhaltungen:
- DE-A1- 102007 039 176
- DE-A1- 102007 062 203

## Beschreibung

Die Erfindung betrifft eine Vorrichtung zum Schätzen eines Straßenreibungskoeffizienten nach dem Oberbegriff des Anspruchs 1 und ein Verfahren zum Schätzen eines Straßenreibungskoeffizienten nach dem Oberbegriff des Anspruchs 6.

Der Straßenreibungskoeffizient ist eine physikalische Größe, die den Übergang von einem Formänderungsschlupf zu einem Gleitschlupf der Reifen eines Fahrzeugs charakterisiert. Der Straßenreibungskoeffizient ist ein Maß dafür, wieviel Antriebs- oder Bremskraft bei einer gegebenen vertikalen Reifenlast über den Reifen des Fahrzeugs auf die Fahrbahn übertragen werden kann. In modernen Fahrzeugen ist die Kenntnis des in dem Reibkontakt zwischen der Fahrbahn und Reifen des Fahrzeugs vorliegenden Straßenreibungskoeffizienten für eine Reihe von Steuerungsfunktionen des Fahrzeugs erforderlich. Insbesondere wird der Straßenreibungskoeffizient für die Traktionssteuerung, die Bremskraftsteuerung und die Drehmomentverteilung benötigt. Eine möglichst genaue Kenntnis des Straßenreibungskoeffizienten bei wechselnden Straßen- und Witterungsverhältnissen ist wünschenswert, um das Fahrzeug stets in einem sicheren Zustand zu betreiben und dabei zugleich die größtmögliche Fahrdynamik bereitzustellen. Fehlerhafte Annahmen bezüglich des Straßenreibungskoeffizienten können hingegen dazu führen, dass das Fahrzeugdynamik-Steuerungssystem das Fahrzeug über die Haftgrenze treibt, wodurch die Steuerbarkeit des Fahrzeugs eingeschränkt wird.

DE 10 2008 019 270 B4 beschreibt ein Verfahren zur Schätzung eines Straßenoberflächenreibungskoeffizienten, bei dem über den Vergleich eines Zahnstangenantriebskraftabweichungswertes mit einem Maximalwertbestimmungsschwellenwert festgestellt wird, ob die Reifen während einer Kurvenfahrt schlupfen. Ist der Maximalwertbestimmungsschwellenwert überschritten, wird ein Vorderrad-Reibungskreisausnutzungsgrad in diesem Zustand als Straßenoberflächenreibungskoeffizient gesetzt. Solange der Maximalwertbestimmungsschwellenwert nicht überschritten wird, wird der Straßenoberflächenreibungskoeffizient mit einer Rücksetzgeschwindigkeit kontinuierlich auf einen im Voraus gesetzten Wert (z.B. 1,0) zurückgeführt. Die Rücksetzgeschwindigkeit wird basierend auf einem im Voraus erstellten Kennfeld in Abhängigkeit von der Fahrzeuggeschwindigkeit und des Vorderrad-Schlupfwinkels bestimmt. Nachteilig ist, dass das bekannte Verfahren ungenau und unsicher arbeitet, da eine auf Messwerten basierende Bestimmung des Straßenoberflächenreibungskoeffizienten nur dann erfolgt, wenn ein Grenzbereich zwischen Formänderungsschlupf und Gleitschlupf der Reifen erreicht wird, d.h. das Fahrzeug bereits die Haftung zu verlieren beginnt. In allen anderen Fahrzuständen wird der Schätzwert für den Straßenoberflächenreibungskoeffizienten unabhängig von den tatsächlich vorliegenden Straßen- und Witterungsverhältnissen auf einen Standardwert zurückgeführt.

DE 10 2007 062 203 A1 beschreibt ein Verfahren und eine Vorrichtung zum Ermitteln eines Reibwerts, wobei ein erster Reibwertparameter unter Verwendung eines Reifenmodells und ein zweiter Reibwertparameter aus dem Quotienten zwischen einer Längskraft und einer Aufstandskraft des Kraftfahrzeugreifens ermittelt wird. Der Reibwert wird aus dem ersten und dem zweiten Reibwertparameter mit einem rekursiven Schätzalgorithmus ermittelt.

Aus DE 10 2007 039 176 A1 ist eine Vorrichtung und ein Verfahren zum Schätzen eines Straßenreibungskoeffizienten nach dem Oberbegriff der Ansprüche 1 und 6 bekannt. Die Schritte zur iterativen Korrektur des für den Reibwert angenommenen Schätzwertes werden dabei zyklisch wiederholt, wobei die Schritte jeweils ausgehend von einem als Untergrenze gewählten ersten Initialschätzwert und ausgehend von einem als Obergrenze gewählten zweiten Initialschätzwert durchgeführt werden. Die Kokonvergenz beider Iterationsprozesse auf einen gemeinsamen Schätzwert ist dann ein notwendiges und hinreichendes Kriterium für die Erfassung des realen Reibwertes.

Es ist daher die Aufgabe der vorliegenden Erfindung, eine Vorrichtung und ein Verfahren zum Schätzen eines Straßenreibungskoeffizienten anzugeben, die eine genauere Ermittlung eines Schätzwertes für den Straßenreibungskoeffizienten in einem sicheren Fahrzustand ermöglicht.

Diese Aufgabe wird gelöst durch eine Vorrichtung zum Schätzen eines Straßenreibungskoeffizienten mit den Merkmalen des Anspruchs 1 und ein Verfahren zum Schätzen eines Stra-βenreibungskoeffizienten mit den Merkmalen des Anspruchs 6.

Hierdurch wird eine Vorrichtung zum zyklischen Schätzen eines Straßenreibungskoeffizienten, der in einem Reibkontakt zwischen einer Fahrbahn und Reifen eines Fahrzeugs vorliegt, geschaffen, die einen Anschluss für einen Beschleunigungssensor zur Eingabe zumindest eines Fahrzeugbeschleunigungsmesswertes, eine Lastbestimmungseinrichtung zur Bestimmung mindestens einer vertikalen Reifenlast, eine Reifenschlupfbestimmungseinrichtung zur Bestimmung zumindest eines Reifenschlupfes der Reifen und eine Reibungskoeffizientenschätzeinrichtung zur Bestimmung und Ausgabe eines Schätzwertes für den Straßenreibungskoeffizienten umfasst. Erfindungsgemäß weist die Vorrichtung ferner eine Beschleunigungsschätzeinrichtung auf, die dazu ausgebildet ist, anhand eines Reifenmodells auf Grundlage zumindest des Reifenschlupfes, der vertikalen Reifenlast und eines in einem vorangegangenen Zyklus bestimmten Schätzwertes für den Straßenreibungskoeffizienten einen Schätzwert für die Fahrzeugbeschleunigung zu bestimmen. Die Reibungskoeffizientenschätzeinrichtung ist dazu ausgebildet, den ausgegebenen Schätzwert für den Straßenreibungskoeffizienten derart anzupassen, dass eine Differenz aus dem Schätzwert und dem Messwert der Fahrzeugbeschleunigung auf einen vorgebbaren Bereich eingeregelt wird. Für den ersten Zyklus kann ein Startwert für den Straßenreibungskoeffizienten vorgegeben werden.

Die erfindungsgemäße Lösung basiert auf einem Vergleich von mittels eines Beschleunigungssensors aufgenommenen Beschleunigungsmesswerten mit zugeordneten Beschleunigungsschätzwerten. Die Beschleunigungsschätzwerte werden anhand eines ermittelten Reifenschlupfes über ein Reifenmodell berechnet, in das der Straßenreibungskoeffizient als Parameter eingeht. Die erfindungsgemäße Schätzvorrichtung enthält folglich eine Rückkopplungsschleife für den Straßenreibungskoeffizienten. Diese Rückkopplungsschleife ermöglicht es, das verwendete Reifenmodell über eine Veränderung des Straßenreibungskoeffizienten so anzupassen, dass es mit den von dem Beschleunigungssensor aufgenommenen tatsächlichen Beschleunigungsmesswerten in Einklang steht.

Ein wesentlicher Vorteil der erfindungsgemäßen Lehre besteht darin, dass die auf einer Optimierung des Reifenmodells beruhende Schätzung des Straßenreibungskoeffizienten grundsätzlich in jedem Fahrzustand durchgeführt werden kann, in dem ein Reifenschlupf auftritt, also insbesondere auch in stabilen Fahrzuständen, in denen Formänderungsschlupf der Reifen dominiert. Auf diese Weise kann die Vorrichtung veränderte Straßen- und/oder Witterungsverhältnisse sicher erkennen, ohne dass ein stabiler Fahrzustand verlassen wird.

In einer vorteilhaften Ausführungsform ist die Vorrichtung dazu ausgebildet, zumindest einen Messwert für die Längsbeschleunigung des Fahrzeugs an dem Anschluss aufzunehmen, und die Beschleunigungsschätzeinrichtung ist dazu ausgebildet, einen Schätzwert für die Längsbeschleunigung des Fahrzeugs zu bestimmen. Ferner ist bevorzugt eine Fahrgeschwindigkeitsschätzeinrichtung vorgesehen, die ausgebildet ist, basierend auf dem Schätzwert und/oder dem Messwert der Fahrzeuglängsbeschleunigung eine Fahrzeuglängsgeschwindigkeit zu schätzen und die Reifenschlupfbestimmungseinrichtung ist dazu ausgebildet, den Reifenschlupf in Längsrichtung auf Grundlage der geschätzten Fahrzeuglängsgeschwindigkeit und Messdaten von Radgeschwindigkeitssensoren zu bestimmen.

Gemäß dieser vorteilhaften Ausführungsform wird das Beschleunigungs- und Schlupfverhalten in Längsrichtung des Fahrzeugs genutzt, um den Straßenreibungskoeffizienten zu bestimmen. Dies wird ermöglicht durch eine Schätzeinrichtung für die Fahrzeuglängsgeschwindigkeit, die die Fahrzeuglängsgeschwindigkeit unabhängig von einem möglicherweise vorliegenden Reifenschlupf bestimmt. Dieser reifenschlupfunempfindliche Schätzwert für die Fahrzeuglängsgeschwindigkeit bietet schon für sich genommen einen relevanten Vorteil für die Fahrdynamiksteuerung. Insbesondere bei Allradantrieben ist eine reifenschlupfunempfindliche Bestimmung der Fahrzeuglängsgeschwindigkeit allein auf Grundlage von Radgeschwindigkeitssensoren nicht möglich. Weiterhin erlaubt der so erhaltene Schätzwert für die Fahrzeuglängsgeschwindigkeit in Verbindung mit Messdaten von Radgeschwindigkeitssensoren die zuverlässige Bestimmung des Reifenschlupfes in Längsrichtung. Auf diese Weise kann der Straßenreibungskoeffizient von der erfindungsgemäßen Vorrichtung auch bei Beschleunigungen und Abbremsungen in Geradeausfahrt ermittelt werden.

Bevorzugt bestimmt die Fahrgeschwindigkeitsschätzeinrichtung die Fahrzeuglängsgeschwindigkeit auf Grundlage einer über die Räder des Fahrzeugs gemittelten Radgeschwindigkeit als Startwert und einem Zeitintegral über den Schätzwert und/oder den Messwert der Fahrzeuglängsbeschleunigung. Der Startwert kann beispielsweise dann aufgenommen werden, wenn der Messwert für die Fahrzeugbeschleunigung unterhalb eines vorbestimmten Schwellenwertes liegt. Der Schwellenwert kann eine Grenze festlegen, unterhalb derer der Reifenschlupf zu vernachlässigen ist.

Vorzugsweise ist die Lastbestimmungseinrichtung dazu ausgebildet, die vertikale Reifenlast für jedes Rad des Fahrzeugs einzeln mittels eines Fahrzeugmodells aus Messwerten des Beschleunigungssensors für die Fahrzeuglängsbeschleunigung und Fahrzeugquerbeschleunigung zu bestimmen. Das Fahrzeugmodell umfasst vorzugsweise das Fahrzeug spezifizierende Daten, wie beispielsweise die Fahrzeugmasse, die Gewichtsverteilung, den Radstand, die Spurbreite und/oder die Lage des Schwerpunktes. Auf Grundlage der das Fahrzeug spezifizierenden Daten können mit Hilfe der Messwerte für Fahrzeuglängsbeschleunigung und Fahrzeugquerbeschleunigung die vertikalen Reifenlasten für jedes Rad des Fahrzeugs einzeln bestimmt werden. Dies resultiert in einer besonders genauen Schätzung des Straßenreibungskoeffizienten.

Die Reibungskoeffizientenschätzeinrichtung ist dazu ausgebildet, den Schätzwert für den Straßenreibungskoeffizienten zu verringern, wenn die Differenz aus dem Schätzwert und dem Messwert der Fahrzeugbeschleunigung größer als ein vorgegebener erster Schwellenwert ist. Vorzugsweise wird die Differenz aus den Absolutwerten von Schätzwert und Messwert der Fahrzeugbeschleunigung gebildet, um die Anpassung gleichermaßen bei Beschleunigungs- und Bremsvorgängen durchführen zu können.

Die Reibungskoeffizientenschätzeinrichtung ist ferner dazu ausgebildet, den Schätzwert für den Straßenreibungskoeffizienten zu erhöhen, wenn die Differenz aus dem Schätzwert und dem Messwert der Fahrzeugbeschleunigung kleiner ist als ein vorgegebener zweiter Schwellenwert und der Messwert der Fahrzeugbeschleunigung größer als ein vorgegebener dritter Schwellenwert ist. Bevorzugt wird dabei der Absolutwert des Messwertes der Fahrzeugbeschleunigung betrachtet. Der zweite Schwellenwert ist kleiner dem ersten Schwellenwert gewählt. Durch die Verwendung eines dritten Schwellenwertes, der die Erhöhung des Straßenreibungskoeffizienten vom Vorliegen einer Mindestbeschleunigung abhängig macht, kann die Robustheit der Schätzung erhöht werden. Da bei Beschleunigungen unterhalb des dritten Schwellenwertes nur geringe Reifenschlupfe auftreten, kann aufgrund der kleinen Messwerte eine erhöhte zufällige Abweichung auftreten, die ignoriert werden kann, bis die Fahrzeugbeschleunigung den vorgegebenen dritten Schwellenwert überschreitet.

Wenn die Differenz zwischen geschätzten und gemessenen Fahrzeugbeschleunigungen kleiner als ein vorgegebener Schwellenwert sind und beide Werte unterhalb des Schwellenwerts liegen, so konnte der aktuelle Reibungskoeffizient nicht ermittelt werden. In diesem Falle ist der vorherige Wert anzuwenden.

In einer bevorzugten Ausführungsform erfolgt die Veränderung des Schätzwertes für den Straßenreibungskoeffizienten proportional zu einem Zeitintegral über die Differenz aus dem Schätzwert und dem Messwert der Fahrzeugbeschleunigung. Hierdurch wird die Regelung der Differenz auf einen vorgebbaren Bereich als Integralregler implementiert. Durch den Integralregler wird das Auftreten einer dauerhaften Regelabweichung ausgeschlossen und ein überschwingendes Regelverhalten vermieden.

Die Aufgabe wird ferner gelöst durch ein Verfahren zum Schätzen eines Straßenreibungskoeffizienten, der in einem Reibkontakt zwischen einer Fahrbahn und Reifen eines Fahrzeugs vorliegt, das die folgenden Schritte umfasst:
a) Bestimmen eines Fahrzeugbeschleunigungsmesswertes mittels eines Beschleunigungssensors,
b) Bestimmen mindestens einer vertikalen Reifenlast mittels einer Lastbestimmungseinrichtung auf Grundlage des zumindest einen Fahrzeugbeschleunigungsmesswertes,
c) Bestimmen zumindest eines Reifenschlupfes mittels einer Reifenschlupfbestimmungseinrichtung,
d) Bestimmen und Ausgeben eines Schätzwertes für den Straßenreibungskoeffizienten mittels einer Reibungskoeffizientenschätzeinrichtung,
e) Zyklisches Wiederholen der Schritte a) bis d),

wobei zum Bestimmen des Schätzwertes für den Straßenreibungskoeffizienten die folgenden weiteren Schritte durchgeführt werden:
   - Bestimmen eines Schätzwertes für die Fahrzeugbeschleunigung anhand eines Reifenmodells auf Grundlage zumindest des Reifenschlupfes, der vertikalen Reifenlast und eines in einem vorangegangenen Zyklus bestimmten Schätzwertes für den Straßenreibungskoeffizienten mittels einer Beschleunigungsschätzeinrichtung,
   - Anpassen des Schätzwertes für den Straßenreibungskoeffizienten durch die Reibungskoeffizientenschätzeinrichtung derart, dass eine Differenz aus dem Schätzwert und dem Messwert der Fahrzeugbeschleunigung auf einen vorgebbaren Bereich eingeregelt wird,
wobei die Reibungskoeffizientenschätzeinrichtung den Schätzwert für den Straßenreibungskoeffizienten verringert, wenn die Differenz aus dem Schätzwert und dem Messwert der Fahrzeugbeschleunigung größer als ein vorgegebener erster Schwellenwert ist und den Schätzwert für den Straßenreibungskoeffizienten erhöht, wenn die Differenz aus dem Schätzwert und dem Messwert der Fahrzeugbeschleunigung kleiner als ein vorgegebener zweiter Schwellenwert ist und der Messwert der Fahrzeugbeschleunigung größer als ein vorgegebener dritter Schwellenwert ist, wobei der zweite Schwellenwert kleiner als der erste Schwellenwert gewählt ist.
Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Figur 1: zeigt schematisch ein Steer-by-Wire-Lenksystem eines Fahrzeugs mit einem Ausführungsbeispiel der erfindungsgemäßen Schätzvorrichtung,
- Figur 2: zeigt schematisch in Draufsicht den Aufbau des Fahrzeugs mit der Schätzvorrichtung gemäß dem Ausführungsbeispiel nach Figur 1,
- Figur 3: zeigt schematisch den Aufbau der Schätzvorrichtung gemäß dem Ausführungsbeispiel nach Figur 1 und 2 in einem Blockschaltbild mit angeschlossenem Beschleunigungssensor und Radgeschwindigkeitssensoren,
- Figur 4: zeigt schematisch in einer Detaildarstellung den Aufbau einer Fahrzustandsschätzeinrichtung der Schätzvorrichtung gemäß Figur 3,
- Figur 5: zeigt beispielhaft in einem Ablaufdiagramm ein Verfahren zur zyklischen Anpassung des Schätzwertes für den Straßenreibungskoeffizienten.

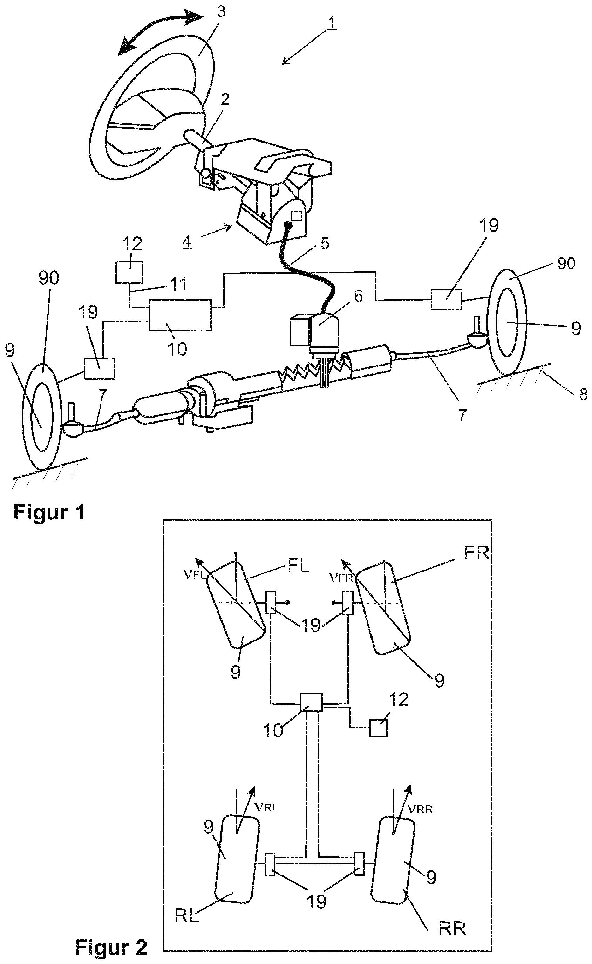

In Figur 1 ist schematisch der Aufbau eines Steer-by-Wire-Lenksystems 1 für ein Kraftfahrzeug mit einer Schätzvorrichtung 10 gemäß einem ersten Ausführungsbeispiel der Erfindung dargestellt. Das Steer-by-Wire-Lenksystem 1 weist ein über eine Lenkwelle 2 mit einem Feedback-Aktuator 4 verbundenes Lenkrad 3 auf. Das Lenksystem 1 umfasst ferner einen auf gelenkte Räder 9 wirkenden, elektronisch regelbaren Lenksteller 6, der über ein Lenkgetriebe mit einer Zahnstange verbunden ist. Die von dem Lenksteller 6 bewirkten Translationen der Zahnstange werden über Spurstangen 7 auf die gelenkten Räder 9 übertragen, um einen Radlenkwinkel einzustellen. Die gelenkten Räder 9 stehen über Reifen 90 in Reibkontakt mit einer Fahrbahn 8. Das Steer-by-Wire-Lenksystem 1 umfasst ferner einen vorzugsweise im Feedback-Aktuator 4 angeordneten, nicht dargestellten Lenkwinkelsensor, der den vom Fahrer eingestellten Lenkwinkel erfasst. Der Feedback-Aktuator 4 und der Lenksteller 6 sind über eine Signalleitung 5 verbunden, über die der Fahrerlenkwunsch an den Lenksteller 6 und die Rückwirkungen von der Fahrbahn 8 an den Feedback-Aktuator 4 übertragen werden können. Bei dem Steer-by-Wire-Lenksystems 1 ist somit keine mechanische Verbindung zwischen Lenkwelle 2 und den gelenkten Rädern 9 erforderlich.

In Figur 1 ist ferner schematisch die Anordnung der erfindungsgemäßen Vorrichtung 10 zum Schätzen eines Straßenreibungskoeffizienten gezeigt. An einem Anschluss 11 der Vorrichtung 10 ist ein Beschleunigungssensor 12 angeschlossen, der vorzugsweise die Fahrzeuglängsbeschleunigung aL und die Fahrzeugquerbeschleunigung aT aufnimmt. Die Vorrichtung 10 weist ferner Anschlüsse für Radgeschwindigkeitssensoren 19 auf.

Das dargestellte Steer-by-Wire-Lenksystem 1 zeigt beispielhaft einen möglichen Einsatzort für die erfindungsgemäße Vorrichtung 10 zum Schätzen eines Straßenreibungskoeffizienten.

Die erfindungsgemäße Schätzvorrichtung ist in gleicher Weise aber auch in einem konventionellen Lenksystem oder an ungelenkten Rädern einsetzbar.

In Figur 2 ist schematisch ein Fahrzeug in Draufsicht mit der Schätzvorrichtung 10 gemäß dem Ausführungsbeispiel nach Figur 1 gezeigt. Die Schätzvorrichtung 10 ist dabei mit Radgeschwindigkeitssensoren 19 an allen vier Rädern 9 des Fahrzeugs und einem Beschleunigungssensor 12 verbunden. Die Räder 9 sind in Abhängigkeit ihrer Position im Fahrzeug mit den Abkürzungen FL, FR, RL, RR für vorne links, vorne rechts, hinten links und hinten rechts bezeichnet. Die Räder 9 können je nach Fahrsituation unterschiedliche momentane Radgeschwindigkeiten vi aufweisen, wobei i für eine der Radbezeichnungen FL, FR, RL und RR steht. Die Radgeschwindigkeiten vi der einzelnen Räder 9 können sich sowohl in ihrem Betrag als auch in ihrer Richtung unterscheiden.

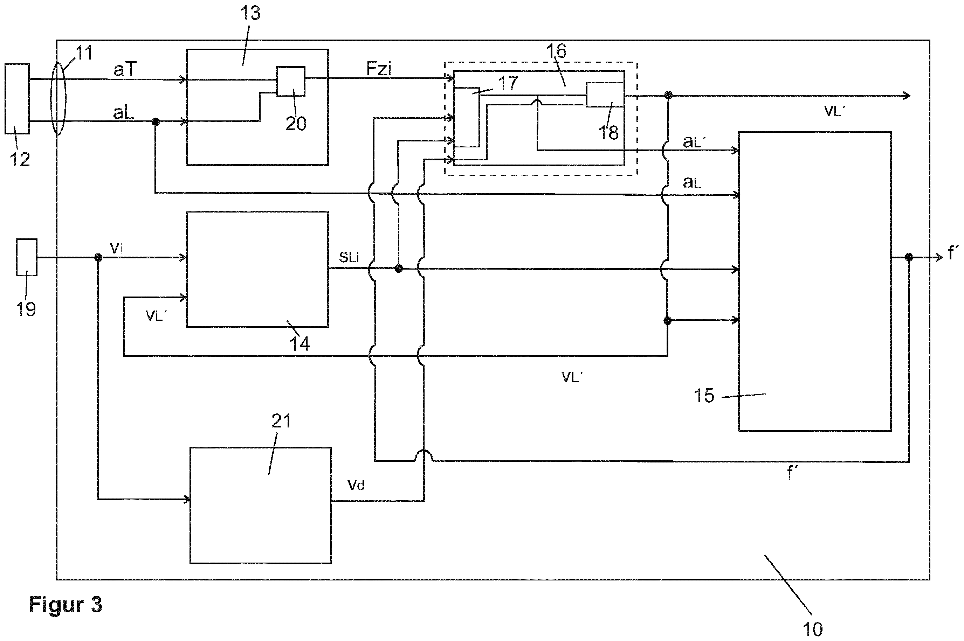

Figur 3 zeigt schematisch den Aufbau der Schätzvorrichtung 10 gemäß dem Ausführungsbeispiel von Figur 1 und 2 in einem Blockschaltbild.

Die Vorrichtung 10 enthält einen Anschluss 11 für einen Beschleunigungssensor 12, eine mit dem Anschluss 11 verbundene Lastbestimmungseinrichtung 13, eine Reifenschlupfbestimmungseinrichtung 14, die mit Radgeschwindigkeitssensoren 19 verbunden ist, und eine Reibungskoeffizientenschätzeinrichtung 15, die einen Schätzwert f` für den Straßenreibungskoeffizienten ausgibt. Ferner enthält die Vorrichtung 10 eine Beschleunigungsschätzeinrichtung 17 und eine Fahrgeschwindigkeitsschätzeinrichtung 18, die in einer Fahrzustandsschätzeinrichtung 16 zusammengefasst sein können. Schließlich enthält die Vorrichtung 10 eine Mittelungseinrichtung 21, zur Bestimmung einer gemittelten Radgeschwindigkeit vd aus den Messdaten vi der Radgeschwindigkeitssensoren 19.

Die Schätzung des Straßenreibungskoeffizienten führt die Vorrichtung 10 wie folgt durch: Zunächst bestimmt die Lastbestimmungseinrichtung 13 mindestens eine vertikale Reifenlast Fzi auf Grundlage zumindest eines Fahrzeugbeschleunigungsmesswertes aL, aT des Beschleunigungssensors 12.

Hierfür umfasst die Lastbestimmungseinrichtung 13 vorzugsweise ein Fahrzeugmodell 20, das die Abhängigkeit der vertikalen Reifenlast Fzi von Fahrzeugbeschleunigungsmesswerten aL, aT für das jeweilige Fahrzeug enthält. Parameter des Fahrzeugmodells 20 können beispielsweise die Fahrzeugmasse, die Gewichtsverteilung, der Radstand, die Spurbreite und/oder die Lage des Schwerpunktes sein. Vorzugsweise ist das Fahrzeugmodell 20 dafür ausgelegt, die vertikale Reifenlast Fzi für jedes Rad des Fahrzeugs einzeln zu bestimmen.

Ferner bestimmt die Reifenschlupfeinrichtung 14 zumindest einen Reifenschlupf sLi. Die Bestimmung des Reifenschlupfes sLi kann beispielsweise aus der Differenz zwischen den Messdaten vi eines Radgeschwindigkeitssensors 19 und einem Schätzwert vL' der Fahrzeuglängsgeschwindigkeit geteilt durch den Schätzwert vL' der Fahrzeuglängsgeschwindigkeit bestimmt werden.

Anschließend bestimmt die Reibungskoeffizientenschätzeinrichtung 15 einen Schätzwert für den Straßenreibungskoeffizienten f` und gibt diesen aus. Für eine kontinuierliche Aktualisierung der ermittelten Werte werden die zuvor beschriebenen Verfahrensschritte zyklisch wiederholt.

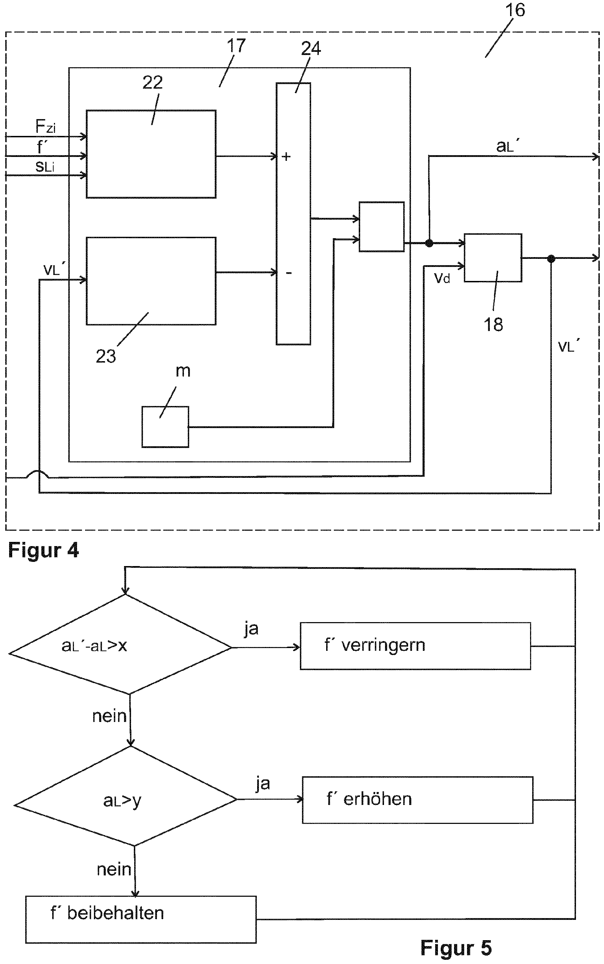

Zur Bestimmung des Schätzwertes für den Straßenreibungskoeffizienten f` bestimmt die Beschleunigungsschätzeinrichtung 17 zunächst einen Schätzwert für die Fahrzeugbeschleunigung aL` anhand eines Reifenmodells 22 auf Grundlage zumindest des Reifenschlupfes sLi, der vertikalen Reifenlast Fzi und eines in einem vorangegangenen Zyklus bestimmten Schätzwertes für den Straßenreibungskoeffizienten f`. Eine mögliche Berechnung des Schätzwertes für die Fahrzeugbeschleunigung aL` wird nachfolgend mit Bezug auf Figur 4 beschrieben.

Auf Grundlage des Schätzwertes für die Fahrzeugbeschleunigung aL` passt die Reibungskoeffizientenschätzeinrichtung 15 den Schätzwert für den Straßenreibungskoeffizienten f` derart an, dass die Differenz aus dem Schätzwert aL` und dem Messwert aL der Fahrzeugbeschleunigung auf einen vorgebbaren Bereich eingeregelt wird. Zur Ausbildung des Regelkreises wird der Schätzwert für den Straßenreibungskoeffizienten f` über eine Rückführungsschleife in die Beschleunigungsschätzeinrichtung 17 zurückgeführt.

Die Schrittweite der Anpassung des Straßenreibungskoeffizienten f` kann parameterabhängig sein, beispielsweise abhängig von der geschätzten Fahrzeuglängsgeschwindigkeit vL' und/oder dem Reifenschlupf sLi.

Der vorgebbare Bereich wird vorzugsweise durch einen oberen Schwellenwert x begrenzt, so dass die Differenz auf einen Wert kleiner als der Schwellenwert x eingeregelt wird. Der obere Schwellenwert liegt vorzugsweise im Bereich 0.5 - 1 m/s^2, besonders bevorzugt im Bereich 0.7 - 0.9 m/s^2.

Vorzugsweise ist die Vorrichtung 10, wie in Figur 3 dargestellt, dazu ausgebildet den Stra-βenreibungskoeffizienten f' anhand des Beschleunigungs- und Schlupfverhaltens des Fahrzeugs in Längsrichtung zu bestimmen. Dies hat den Vorteil, dass der Straßenreibungskoeffizient auch bei Geradeausfahrt zuverlässig bestimmt werden kann. Dafür misst der Beschleunigungssensor 12 zumindest die Längsbeschleunigung aL des Fahrzeugs und die Beschleunigungsschätzeinrichtung 17 bestimmt einen Schätzwert für die Längsbeschleunigung aL` des Fahrzeugs. Ferner ist die Fahrgeschwindigkeitsschätzeinrichtung 18 vorgesehen, die basierend auf dem Schätzwert aL` und/oder dem Messwert aL der Fahrzeuglängsbeschleunigung eine Fahrzeuglängsgeschwindigkeit vL` schätzt. Die Reifenschlupfbestimmungseinrichtung 14 kann dann, wie oben beschrieben, den Reifenschlupf sLi in Längsrichtung auf Grundlage der geschätzten Fahrzeuglängsgeschwindigkeit vL' und Messdaten vi von Radgeschwindigkeitssensoren 19 bestimmen.

Insbesondere kann vorgesehen sein, dass die Fahrgeschwindigkeitsschätzeinrichtung 18 die Fahrzeuglängsgeschwindigkeit vL' auf Grundlage einer über die Räder des Fahrzeugs gemittelten Radgeschwindigkeit vd als Startwert und einem Zeitintegral über den Schätzwert aL` und/oder den Messwert aL der Fahrzeuglängsbeschleunigung bestimmt.

Gemäß einem nicht dargestellten Ausführungsbeispiel kann aber auch das Beschleunigungs- und Schlupfverhalten des Fahrzeugs in Querrichtung alternativ oder zusätzlich zum Verhalten in Längsrichtung zur Bestimmung des Straßenreibungskoeffizienten herangezogen werden. Der Querschlupf der Reifen kann dann aus der Differenz einer gemessenen Gierrate und einer aufgrund des eingestellten Radlenkwinkels erwarteten Gierrate bestimmt werden. Das Reifenmodell liefert in Abhängigkeit von der vertikalen Reifenbelastung eine dem Querschlupf zugeordnete Querkraft, aus der ein Schätzwert für die Querbeschleunigung bestimmt wird. Der Beschleunigungssensor bestimmt einen Messwert der Querbeschleunigung und die Reibungskoeffizientenschätzeinrichtung passt den Schätzwert des Straßenreibungskoeffizienten derart an, dass die Differenz von Schätzwert und Messwert der Querbeschleunigung in einen vorgebbaren Bereich eingeregelt wird.

In Figur 4 ist schematisch der Aufbau der Fahrzustandsschätzeinrichtung 16 gezeigt. Die Fahrzustandsschätzeinrichtung 16 umfasst eine Beschleunigungsschätzeinrichtung 17 und eine Fahrgeschwindigkeitsschätzeinrichtung 18. Die Fahrzustandsschätzeinrichtung 16 erhält als Eingangsgrößen die vertikalen Reifenlasten Fzi, den Schätzwert des Straßenreibungskoeffizienten f` und die Reifenschlupfwerte sLi, die der Beschleunigungsschätzeinrichtung 17 zugeführt werden, sowie eine mittlere Radgeschwindigkeit vd, die der Fahrgeschwindigkeitsschätzeinrichtung 18 zugeführt wird.

In der Beschleunigungsschätzeinrichtung 17 werden die vertikalen Reifenlasten Fzi, der Schätzwert des Straßenreibungskoeffizienten f` und die Reifenschlupfwerte sLi einem Reifenmodell 22 zugeführt. Das Reifenmodell 22 enthält vorzugsweise eine funktionale Abhängigkeit, die dem Reifenschlupf sLi bei gegebener vertikaler Reifenlast Fzi und gegebenem Straßenreibungskoeffizienten f` eine auf den jeweiligen Reifen 90 wirkende Horizontalkraft zuordnet. Beispielsweise kann einem Längsschlupf sLi des Reifens wie in dem dargestellten Ausführungsbeispiel eine Reifenlängskraft zugeordnet werden. Übliche einsetzbare Reifenmodelle 22 sind beispielsweise Pacejka oder TM Easy. Das Reifenmodell 22 gibt schließlich die Summe der auf die Reifen 90 wirkenden Längskräfte aus.

Die Beschleunigungsschätzeinrichtung 17 umfasst ferner eine Fahrwiderstandsschätzeinrichtung 23, die basierend auf der geschätzten Längsgeschwindigkeit vL' eine Fahrwiderstandskraft berechnet, beispielsweise auf Grundlage von hinterlegten Kennlinien eines geschwindigkeitsabhängigen Roll- und/oder Luftwiderstands.

Von der Summe der auf die Reifen 90 wirkenden Längskräften wird in einem Subtrahierer 24 die Fahrwiderstandskraft abgezogen, um eine für die Längsbeschleunigung des Fahrzeugs wirksame Gesamtkraft zu erhalten. Die Gesamtkraft wird in einem Dividierer 25 durch die Fahrzeugmasse m geteilt, so dass am Ausgang des Dividierers der Schätzwert für die Längsbeschleunigung aL` des Fahrzeugs anliegt.

Der Schätzwert für die Längsbeschleunigung aL` des Fahrzeugs wird der Geschwindigkeitsschätzeinrichtung 18 zugeführt, die ein Zeitintegral über die Längsbeschleunigung aL` berechnet und mit der mittleren Radgeschwindigkeit vd als Startwert einen Schätzwert für die Längsgeschwindigkeit vL` berechnet. Der Startwert vd wird vorzugsweise nur dann aktualisiert und die Integration neu begonnen, wenn der Schätzwert für die Längsbeschleunigung oder der Messwert für die Längsbeschleunigung unterhalb eines Grenzwertes liegt, bei dem nur ein vernachlässigbarer Reifenschlupf zu erwarten ist. Hierdurch ist der Schätzwert für die Längsgeschwindigkeit vL` weitgehend unbeeinflusst vom aktuellen Reifenschlupf sLi. Der Schätzwert für die Längsgeschwindigkeit vL` wird der Fahrwiderstandsschätzeinrichtung bereitgestellt. An den Ausgängen der Fahrzustandsschätzeinrichtung 16 wird der Schätzwert für die Längsbeschleunigung aL` und für die Längsgeschwindigkeit vL' ausgegeben.

In Figur 5 ist ein Beispiel für ein Regelverfahren zur Anpassung des Straßenreibungskoeffizienten dargestellt. Zunächst wird die Differenz aus dem Schätzwert aL` und dem Messwert aL der Fahrzeugbeschleunigung bestimmt. Wenn die Differenz aus dem Schätzwert aL` und dem Messwert aL der Fahrzeugbeschleunigung größer als ein vorgegebener erster Schwellenwert x ist, verringert die Reibungskoeffizientenschätzeinrichtung 15 den Schätzwert für den Straßenreibungskoeffizienten f`.

Wenn die Differenz aus dem Schätzwert aL` und dem Messwert aL der Fahrzeugbeschleunigung kleiner ist als ein vorgegebener zweiter Schwellenwert und der Messwert aL der Fahrzeugbeschleunigung größer ist als ein vorgegebener dritter Schwellenwert y, erhöht die Reibungskoeffizientenschätzeinrichtung 15 den Schätzwert für den Straßenreibungskoeffizienten f`. In dem dargestellten Vergleichsbeispiel ist der zweite Schwellenwert gleich dem ersten Schwellenwert x gewählt.

Der Schätzwert für den Straßenreibungskoeffizienten f` wird vorzugsweise sowohl bei der Verringerung als auch bei der Erhöhung proportional zu einem Zeitintegral über die Differenz aus dem Schätzwert aL` und dem Messwert aL der Fahrzeugbeschleunigung verändert. Die Proportionalitätskonstante kann parameterabhängig, beispielsweise abhängig von dem aktuellen Reifenschlupf sLi oder der Längsgeschwindigkeit vL' gewählt werden.

Der dritte Schwellenwert y wird vorzugsweise im Bereich von 1-3 m/s^2, besonders bevorzugt zu 2 m/s^2 gewählt.

In dem Fall, dass die Differenz aus dem Schätzwert aL` und dem Messwert aL der Fahrzeugbeschleunigung kleiner ist als der vorgegebene zweite Schwellenwert, aber der Messwert aL der Fahrzeugbeschleunigung auch kleiner ist als der vorgegebene dritter Schwellenwert y, wird der bisherige Schätzwert für den Straßenreibungskoeffizienten f` beibehalten.

Anschließend wird die Regelschleife erneut begonnen durch Bestimmung der Differenz aus einem auf dem angepassten Straßenreibungskoeffizienten f` beruhenden Schätzwert aL` und einem aktualisierten Messwert aL der Fahrzeugbeschleunigung.

Die Vorrichtung 10 gemäß dem Ausführungsbeispiel nach den Figuren 1 bis 5 kann in allen Fahrzeugen mit einem Beschleunigungssensor und Radgeschwindigkeitssensoren eingesetzt werden.

Es ist grundsätzlich vorteilhaft Absolutwerte der Fahrzeugbeschleunigungsmess- und - schätzwerte heranzuziehen, um das Verfahren und die Vorrichtung gleichermaßen bei positiven Fahrzeugbeschleunigungen und negativen Fahrzeugbeschleunigungen (Abbremsen) anwenden zu können.

### Bezugszeichenliste

- 1: Steer-by-Wire-Lenksystem
- 2: Lenkwelle
- 3: Lenkrad
- 4: Feedback-Aktuator
- 5: Signalleitung
- 6: Lenksteller
- 7: Spurstange
- 8: Fahrbahn
- 9: Rad
- 90: Reifen
- 10: Vorrichtung zum Schätzen eines Straßenreibungskoeffizienten
- 11: Anschluss für Beschleunigungssensor
- 12: Beschleunigungssensor
- 13: Lastbestimmungseinrichtung
- 14: Reifenschlupfbestimmungseinrichtung
- 15: Reibungskoeffizientenschätzeinrichtung
- 16: Fahrzustandsschätzeinrichtung
- 17: Beschleunigungsschätzeinrichtung
- 18: Fahrgeschwindigkeitsschätzeinrichtung
- 19: Radgeschwindigkeitssensoren
- 20: Fahrzeugmodell
- 21: Mittelungseinrichtung
- 22: Reifenmodell
- 23: Fahrwiderstandsschätzeinrichtung
- 24: Subtrahierer
- 25: Dividierer
- aT: Messwert Fahrzeugquerbeschleunigung
- aL: Messwert Fahrzeuglängsbeschleunigung
- aL`: Schätzwert Fahrzeuglängsbeschleunigung
- f': Schätzwert Straßenreibungskoeffizient
- Fzi: vertikale Reifenlast
- sLi: Reifenschlupf in Längsrichtung
- vd: mittlere Radgeschwindigkeit
- vi: Messdaten Radgeschwindigkeit
- vL': Schätzwert Längsgeschwindigkeit
- x, y: Schwellenwert

## Patentansprüche

1. Vorrichtung zum Schätzen eines Straßenreibungskoeffizienten, der in einem Reibkontakt zwischen einer Fahrbahn (8) und Reifen (90) eines Fahrzeugs vorliegt, wobei die Vorrichtung (10) einen Anschluss (11) für einen Beschleunigungssensor (12) zur Eingabe zumindest eines Fahrzeugbeschleunigungsmesswertes (aT, aL), eine Lastbestimmungseinrichtung (13) zur Bestimmung mindestens einer vertikalen Reifenlast (Fzi), eine Reifenschlupfbestimmungseinrichtung (14) zur Bestimmung zumindest eines Reifenschlupfes (sLi) der Reifen (90) und eine Reibungskoeffizientenschätzeinrichtung (15) zur Bestimmung und Ausgabe eines Schätzwertes für den Straßenreibungskoeffizienten (f`) umfasst, wobei die Vorrichtung (10) ferner eine Beschleunigungsschätzeinrichtung (17) aufweist, die dazu ausgebildet ist, anhand eines Reifenmodells (22) auf Grundlage zumindest des Reifenschlupfes (sLi), der vertikalen Reifenlast (Fzi) und eines in einem vorangegangenen Zyklus bestimmten Schätzwertes für den Stra-βenreibungskoeffizienten (f') einen Schätzwert für die Fahrzeugbeschleunigung (aL') zu bestimmen, und die Reibungskoeffizientenschätzeinrichtung (15) dazu ausgebildet ist, den ausgegebenen Schätzwert für den Straßenreibungskoeffizienten (f`)anzupassen, **dadurch gekennzeichnet, dass** die Anpassung derart erfolgt, dass eine Differenz aus dem Schätzwert (aL') und dem Messwert der Fahrzeugbeschleunigung (aL) auf einen vorgebbaren Bereich eingeregelt wird, wobei die Reibungskoeffizientenschätzeinrichtung (15) dazu ausgebildet ist, den Schätzwert für den Straßenreibungskoeffizienten (f`) zu verringern, wenn die Differenz aus dem Schätzwert (aL') und dem Messwert (aL) der Fahrzeugbeschleunigung größer als ein vorgegebener erster Schwellenwert (x) ist und den Schätzwert für den Straßenreibungskoeffizienten (f') zu erhöhen, wenn die Differenz aus dem Schätzwert (aL') und dem Messwert (aL) der Fahrzeugbeschleunigung kleiner als ein vorgegebener zweiter Schwellenwert ist und der Messwert der Fahrzeugbeschleunigung (aL) größer als ein vorgegebener dritter Schwellenwert (y) ist, wobei der zweite Schwellenwert kleiner als der erste Schwellenwert (x) gewählt ist.

2. Vorrichtung zum Schätzen eines Straßenreibungskoeffizienten nach Anspruch 1, **dadurch gekennzeichnet, dass** die Vorrichtung (10) dazu ausgebildet ist, zumindest einen Messwert für die Längsbeschleunigung (aL) des Fahrzeugs an dem Anschluss (11) aufzunehmen, die Beschleunigungsschätzeinrichtung (17) dazu ausgebildet ist, einen Schätzwert für die Längsbeschleunigung (aL') des Fahrzeugs zu bestimmen, eine Fahrgeschwindigkeitsschätzeinrichtung (18) vorgesehen ist, die ausgebildet ist, basierend auf dem Schätzwert (aL') und/oder dem Messwert (aL) der Fahrzeuglängsbeschleunigung eine Fahrzeuglängsgeschwindigkeit (vL') zu schätzen und die Reifenschlupfbestimmungseinrichtung (14) dazu ausgebildet ist, den Reifenschlupf (sLi) in Längsrichtung auf Grundlage der geschätzten Fahrzeuglängsgeschwindigkeit (vL') und Messdaten (vi) von Radgeschwindigkeitssensoren (19) zu bestimmen.

3. Vorrichtung zum Schätzen eines Straßenreibungskoeffizienten nach Anspruch 2, **dadurch gekennzeichnet, dass** die Fahrgeschwindigkeitsschätzeinrichtung (18) die Fahrzeuglängsgeschwindigkeit (vL') auf Grundlage einer über die Räder des Fahrzeugs gemittelten Radgeschwindigkeit (vd) als Startwert und einem Zeitintegral über den Schätzwert (aL') und/oder den Messwert (aL) der Fahrzeuglängsbeschleunigung bestimmt.

4. Vorrichtung zum Schätzen eines Straßenreibungskoeffizienten nach einem der Ansprüche 1 bis 3, **dadurch gekennzeichnet, dass** die Lastbestimmungseinrichtung (13) dazu ausgebildet ist, die vertikale Reifenlast (Fzi) für jedes Rad des Fahrzeugs einzeln mittels eines Fahrzeugmodells (20) aus Messwerten des Beschleunigungssensors (12) für die Fahrzeuglängsbeschleunigung (aL) und Fahrzeugquerbeschleunigung (aT) zu bestimmen.

5. Vorrichtung zum Schätzen eines Straßenreibungskoeffizienten nach einem der Ansprüche 1 bis 4, **dadurch gekennzeichnet, dass** die Veränderung des Schätzwertes für den Straßenreibungskoeffizienten (f') proportional zu einem Zeitintegral über die Differenz aus dem Schätzwert (aL') und dem Messwert (aL) der Fahrzeugbeschleunigung erfolgt.

6. Verfahren zum Schätzen eines Straßenreibungskoeffizienten, der in einem Reibkontakt zwischen einer Fahrbahn (8) und Reifen (90) eines Fahrzeugs vorliegt, umfassend die folgenden Schritte:
a) Bestimmen zumindest eines Fahrzeugbeschleunigungsmesswertes (aL, aT) mittels eines Beschleunigungssensors (12),
b) Bestimmen mindestens einer vertikalen Reifenlast (Fzi) mittels einer Lastbestimmungseinrichtung (13) auf Grundlage des zumindest einen Fahrzeugbeschleunigungsmesswertes (aL, aT),
c) Bestimmen zumindest eines Reifenschlupfes (sLi) mittels einer Reifenschlupfbestimmungseinrichtung (14),
d) Bestimmen und Ausgeben eines Schätzwertes für den Straßenreibungskoeffizienten (f') mittels einer Reibungskoeffizientenschätzeinrichtung (15),
e) zyklisches Wiederholen der Schritte a) bis d),
wobei zur Bestimmung des Schätzwertes für den Straßenreibungskoeffizienten (f') die folgenden weiteren Schritte durchgeführt werden:
- Bestimmen eines Schätzwertes für die Fahrzeugbeschleunigung (aL') anhand eines Reifenmodells (22) auf Grundlage zumindest des Reifenschlupfes (sLi), der vertikalen Reifenlast (Fzi) und eines in einem vorangegangenen Zyklus bestimmten Schätzwertes für den Straßenreibungskoeffizienten (f') mittels einer Beschleunigungsschätzeinrichtung (17),
- Anpassen des Schätzwertes für den Straßenreibungskoeffizienten (f') durch die Reibungskoeffizientenschätzeinrichtung (15)
**dadurch gekennzeichnet, dass** das Anpassen des Schätzwertes derart erfolgt, dass eine Differenz aus dem Schätzwert (aL') und dem Messwert (aL) der Fahrzeugbeschleunigung auf einen vorgebbaren Bereich eingeregelt wird,
wobei die Reibungskoeffizientenschätzeinrichtung (15) den Schätzwert für den Stra-βenreibungskoeffizienten (f`) verringert, wenn die Differenz aus dem Schätzwert (aL') und dem Messwert (aL) der Fahrzeugbeschleunigung größer als ein vorgegebener erster Schwellenwert (x) ist und den Schätzwert für den Straßenreibungskoeffizienten (f') erhöht, wenn die Differenz aus dem Schätzwert (aL') und dem Messwert (aL) der Fahrzeugbeschleunigung kleiner als ein vorgegebener zweiter Schwellenwert ist und der Messwert (aL) der Fahrzeugbeschleunigung größer als ein vorgegebener dritter Schwellenwert (y) ist,
wobei der zweite Schwellenwert kleiner als der erste Schwellenwert (x) gewählt ist.

7. Verfahren zum Schätzen eines Straßenreibungskoeffizienten nach Anspruch 6, **dadurch gekennzeichnet, dass** der Beschleunigungssensor (12) zumindest die Längsbeschleunigung (aL) des Fahrzeugs misst, die Beschleunigungsschätzeinrichtung (17) einen Schätzwert für die Längsbeschleunigung (aL') des Fahrzeugs bestimmt, eine Fahrgeschwindigkeitsschätzeinrichtung (18) vorgesehen ist, die basierend auf dem Schätzwert (aL') und/oder dem Messwert (aL) der Fahrzeuglängsbeschleunigung eine Fahrzeuglängsgeschwindigkeit (vL') schätzt und die Reifenschlupfbestimmungseinrichtung (14) den Reifenschlupf (sLi) in Längsrichtung auf Grundlage der geschätzten Fahrzeuglängsgeschwindigkeit (vL') und Messdaten (vi) von Radgeschwindigkeitssensoren (19) bestimmt.

8. Verfahren zum Schätzen eines Straßenreibungskoeffizienten nach Anspruch 7, **dadurch gekennzeichnet, dass** die Fahrgeschwindigkeitsschätzeinrichtung (18) die Fahrzeuglängsgeschwindigkeit (vL') auf Grundlage einer über die Räder des Fahrzeugs gemittelten Radgeschwindigkeit (vd) als Startwert und einem Zeitintegral über den Schätzwert (aL') und/oder den Messwert (aL) der Fahrzeuglängsbeschleunigung bestimmt.

9. Verfahren zum Schätzen eines Straßenreibungskoeffizienten nach einem der Ansprüche 6 bis 8, **dadurch gekennzeichnet, dass** die Lastbestimmungseinrichtung (13) die vertikale Reifenlast (Fzi) für jedes Rad des Fahrzeugs einzeln mittels eines Fahrzeugmodells (20) aus Messwerten des Beschleunigungssensors (12) für die Fahrzeuglängsbeschleunigung (aL) und die Fahrzeugquerbeschleunigung (aT) bestimmt.

10. Verfahren zum Schätzen eines Straßenreibungskoeffizienten nach einem der Ansprüche 6 bis 9, **dadurch gekennzeichnet, dass** der Schätzwert für den Straßenreibungskoeffizienten (f') proportional zu einem Zeitintegral über die Differenz aus dem Schätzwert (aL') und dem Messwert (aL) der Fahrzeugbeschleunigung verändert wird.

## Claims

1. An apparatus for estimating a road friction coefficient present in a frictional contact between a road surface (8) and tires (90) of a vehicle, the apparatus (10) comprising a connector (11) for an acceleration sensor (12) for inputting at least one vehicle acceleration reading (aT, aL), a load determining device (13) for determining at least one vertical tire load (Fzi), a tire slip determining device (14) for determining at least one tire slip (sLi) of the tires (90) and a friction coefficient estimating device (15) for determining and outputting an estimated value for the road friction coefficient (f'), wherein the apparatus (10) further comprises an acceleration estimation device (17) adapted to determine an estimated value for the vehicle acceleration (aL') from a tire model (22) based on at least the tire slip (sLi), the vertical tire load (Fzi) and an estimated value for the road friction coefficient (f') determined in a previous cycle, and wherein the friction coefficient estimating device (15) is configured to adjust the outputted estimated value for the road friction coefficient (f'), **characterized in that** the adjustment is carried out in such a way that a difference between the estimated value (aL') and the measured value of the vehicle acceleration (aL) is adjusted to a predeterminable range, the friction coefficient estimating device (15) being configured to reduce the estimated value for the road friction coefficient (f'), if the difference between the estimated value (aL') and the measured value (aL) of the vehicle acceleration is greater than a predetermined first threshold value (x) and to increase the estimated value for the road friction coefficient (f'), if the difference between the estimated value (aL') and the measured value (aL) of the vehicle acceleration is less than a predetermined second threshold value and the measured value of the vehicle acceleration (aL) is greater than a predetermined third threshold value (y), the second threshold value being selected to be less than the first threshold value (x).

2. Apparatus for estimating a road friction coefficient according to claim 1, **characterized in that** the apparatus (10) is configured to record at least one measured value for the longitudinal acceleration (aL) of the vehicle at the connector (11), the acceleration estimation device (17) is configured to determine an estimated value for the longitudinal acceleration (aL') of the vehicle, a driving speed estimation device (18) is provided, which is configured to estimate a longitudinal vehicle speed (vL') on the basis of the estimated value (aL') and/or the measured value (aL) of the longitudinal acceleration of the vehicle, and the tire slip determining device (14) is configured to determine the tire slip (sLi) in the longitudinal direction on the basis of the estimated longitudinal vehicle speed (vL') and measurement data (vi) from wheel speed sensors (19).

3. Apparatus for estimating a road friction coefficient according to claim 2, **characterized in that** the driving speed estimating device (18) determines the longitudinal vehicle speed (vL') on the basis of a wheel speed (vd) averaged over the wheels of the vehicle as an initial value and a time integral over the estimated value (aL') and/or the measured value (aL) of the vehicle longitudinal acceleration.

4. Apparatus for estimating a road friction coefficient according to one of claims 1 to 3, **characterized in that** the load determining device (13) is configured to determine the vertical tire load (Fzi) for each wheel of the vehicle individually by means of a vehicle model (20) from measured values of the acceleration sensor (12) for the vehicle longitudinal acceleration (aL) and vehicle transverse acceleration (aT).

5. Apparatus for estimating a road friction coefficient according to one of claims 1 to 4, **characterized in that** the change in the estimated value for the road friction coefficient (f') is proportional to a time integral over the difference between the estimated value (aL') and the measured value (aL) of the vehicle acceleration.

6. A method of estimating a road friction coefficient present in a frictional contact between a road surface (8) and tires (90) of a vehicle, comprising the following steps:
a) determining at least one vehicle acceleration reading (aL, aT) by means of an acceleration sensor (12),
b) determining at least one vertical tire load (Fzi) by means of a load determining device (13) on the basis of the at least one measured vehicle acceleration value (aL, aT),
c) determining at least one tire slip (sLi) by means of a tire slip determining device (14),
d) determining and outputting an estimated value for the road friction coefficient (f') by means of a friction coefficient estimating device (15),
e) cyclically repeating steps a) to d),
the following further steps being carried out to determine the estimated value for the road friction coefficient (f'):
- determining an estimated value for the vehicle acceleration (aL') using a tire model (22) on the basis of at least the tire slip (sLi), the vertical tire load (Fzi) and an estimated value for the road friction coefficient (f') determined in a previous cycle by means of an acceleration estimation device (17),
- adapting of the estimated value for the road friction coefficient (f') by means of the friction coefficient estimating device (15)
**characterized in that** the estimated value is adapted in such a way that a difference between the estimated value (aL') and the measured value (aL) of the vehicle acceleration is controlled to be in a predeterminable range,
wherein the friction coefficient estimating device (15) reduces the estimated value for the road friction coefficient (f') if the difference between the estimated value (aL') and the measured value (aL) of the vehicle acceleration is greater than a predetermined first threshold value (x) and increases the estimated value for the road friction coefficient (f'), if the difference between the estimated value (aL') and the measured value (aL) of the vehicle acceleration is less than a predetermined second threshold value and the measured value (aL) of the vehicle acceleration is greater than a predetermined third threshold value (y),
the second threshold value being smaller than the first threshold value (x).

7. Method for estimating a road friction coefficient according to claim 6, **characterized in that** the acceleration sensor (12) measures at least the longitudinal acceleration (aL) of the vehicle, the acceleration estimation device (17) determines an estimated value for the longitudinal acceleration (aL') of the vehicle, a driving speed estimation device (18) is provided, which estimates a longitudinal vehicle speed (vL') based on the estimated value (aL') and/or the measured value (aL) of the longitudinal acceleration of the vehicle, and the tire slip determining device (14) determines the tire slip (sLi) in the longitudinal direction on the basis of the estimated longitudinal vehicle speed (vL') and measurement data (vi) from wheel speed sensors (19).

8. Method for estimating a road friction coefficient according to claim 7, **characterized in that** the driving speed estimating device (18) determines the longitudinal vehicle speed (vL') on the basis of a wheel speed (vd) averaged over the wheels of the vehicle as an initial value and a time integral over the estimated value (aL') and/or the measured value (aL) of the vehicle longitudinal acceleration.

9. Method for estimating a road friction coefficient according to one of claims 6 to 8, **characterized in that** the load determining device (13) determines the vertical tire load (Fzi) for each wheel of the vehicle individually by means of a vehicle model (20) from measured values of the acceleration sensor (12) for the vehicle longitudinal acceleration (aL) and the vehicle transverse acceleration (aT).

10. Method for estimating a road friction coefficient according to one of claims 6 to 9, **characterized in that** the estimated value for the road friction coefficient (f') is varied in proportion to a time integral over the difference between the estimated value (aL') and the measured value (aL) of the vehicle acceleration.

## Revendications

1. Dispositif pour estimer un coefficient de frottement routier présent dans un contact de frottement entre une surface de roulement (8) et des pneus (90) d'un véhicule, le dispositif (10) comprenant une connexion (11) pour un capteur d'accélération (12) pour entrer au moins une valeur de mesure d'accélération du véhicule (aT, aL), un dispositif de détermination de charge (13) pour déterminer au moins une charge verticale de pneu (Fzi), un dispositif de détermination de glissement de pneu (14) pour déterminer au moins un glissement de pneu (sLi) des pneus (90) et un dispositif d'estimation de coefficient de frottement (15) pour déterminer et fournir une estimation du coefficient de frottement routier (f'), dans lequel le dispositif (10) comprend en outre un dispositif d'estimation d'accélération (17) qui est conçu pour déterminer une valeur estimée de l'accélération du véhicule (aL') à partir d'un modèle de pneu (22) sur la base d'au moins le glissement de pneu (sLi), la charge verticale du pneu (Fzi) et une valeur estimée du coefficient de frottement routier (f') déterminée dans un cycle précédent, et le dispositif d'estimation du coefficient de frottement (15) est conçu pour adapter la valeur estimée délivrée pour le coefficient de frottement routier (f'), **caractérisé en ce que** l'adaptation s'effectue de telle sorte qu'une différence entre la valeur estimée (aL') et la valeur mesurée de l'accélération du véhicule (aL) est réglée sur une plage pouvant être prédéterminée, le dispositif d'estimation du coefficient de frottement (15) étant conçu pour réduire la valeur estimée pour le coefficient de frottement routier (f'), lorsque la différence entre la valeur estimée (aL') et la valeur mesurée (aL) de l'accélération du véhicule est supérieure à une première valeur de seuil prédéterminée (x) et à augmenter la valeur estimée du coefficient de frottement routier (f'), lorsque la différence entre la valeur estimée (aL') et la valeur mesurée (aL) de l'accélération du véhicule est inférieure à une deuxième valeur de seuil prédéterminée et que la valeur mesurée (aL) de l'accélération du véhicule est supérieure à une troisième valeur de seuil prédéterminée (y), la deuxième valeur de seuil étant choisie inférieure à la première valeur de seuil (x).

2. Dispositif d'estimation d'un coefficient de frottement routier selon la revendication 1, **caractérisé en ce que** le dispositif (10) est adapté pour prendre au moins une valeur de mesure de l'accélération longitudinale (aL) du véhicule au niveau de la connexion (11), le dispositif d'estimation d'accélération (17) est adapté pour déterminer une valeur d'estimation de l'accélération longitudinale (aL') du véhicule, un dispositif d'estimation de vitesse de déplacement (18) est prévu, qui est conçu pour estimer une vitesse longitudinale du véhicule (vL') sur la base de la valeur estimée (aL') et/ou de la valeur mesurée (aL) de l'accélération longitudinale du véhicule, et le dispositif de détermination du glissement des pneus (14) est conçu pour déterminer le glissement de pneu (sLi) dans la direction longitudinale sur la base de la vitesse longitudinale estimée du véhicule (vL') et des données de mesure (vi) des capteurs de vitesse des roues (19).

3. Dispositif d'estimation d'un coefficient de frottement routier selon la revendication 2, **caractérisé en ce que** le dispositif d'estimation de vitesse de déplacement (18) détermine la vitesse longitudinale du véhicule (vL') sur la base d'une vitesse de roue (vd) moyennée sur les roues du véhicule comme valeur de départ et d'une intégrale de temps sur la valeur estimée (aL') et/ou la valeur mesurée (aL) de l'accélération longitudinale du véhicule.

4. Dispositif d'estimation d'un coefficient de frottement routier selon l'une des revendications 1 à 3, **caractérisé en ce que** le dispositif de détermination de charge (13) est conçu pour déterminer la charge verticale du pneu (Fzi) pour chaque roue du véhicule individuellement au moyen d'un modèle de véhicule (20) à partir de valeurs de mesure du capteur d'accélération (12) pour l'accélération longitudinale du véhicule (aL) et l'accélération transversale du véhicule (aT).

5. Dispositif d'estimation d'un coefficient de frottement routier selon l'une des revendications 1 à 4, **caractérisé en ce que** la modification de la valeur estimée pour le coefficient de frottement routier (f') est proportionnelle à une intégrale de temps sur la différence entre la valeur estimée (aL') et la valeur mesurée (aL) de l'accélération du véhicule.

6. Procédé d'estimation d'un coefficient de frottement routier présent dans un contact de frottement entre une surface de roulement (8) et des pneus (90) d'un véhicule, comprenant les étapes suivantes :
a) déterminer d'au moins une mesure d'accélération du véhicule (aL, aT) au moyen d'un capteur d'accélération (12),
b) déterminer au moins une charge verticale du pneu (Fzi) au moyen d'un dispositif de détermination de charge (13) sur la base de ladite au moins une valeur de mesure d'accélération du véhicule (aL, aT),
c) déterminer au moins un glissement de pneu (sLi) au moyen d'un dispositif de détermination de glissement de pneu (14),
d) déterminer et délivrer une estimation du coefficient de frottement routier (f') au moyen d'un dispositif d'estimation du coefficient de frottement (15),
e) répéter de manière cyclique les étapes a) à d),
dans lequel, pour déterminer la valeur estimée du coefficient de frottement routier (f'), on effectue les étapes supplémentaires suivantes :
- déterminer une valeur estimée pour l'accélération du véhicule (aL') à l'aide d'un modèle de pneu (22) sur la base d'au moins le glissement de pneu (sLi), de la charge verticale du pneu (Fzi) et une valeur estimée pour le coefficient de frottement routier (f') déterminée dans un cycle précédent au moyen d'un dispositif d'estimation de l'accélération (17),
- ajuster la valeur estimée du coefficient de frottement routier (f') par le moyen du dispositif d'estimation du coefficient de frottement (15).
**caractérisé en ce que** l'adaptation de la valeur estimée s'effectue de telle sorte qu'une différence entre la valeur estimée (aL') et la valeur mesurée (aL) de l'accélération du véhicule est réglée sur une plage pouvant être prédéfinie,
dans lequel le dispositif d'estimation du coefficient de frottement (15) réduit la valeur estimée du coefficient de frottement routier (f') lorsque la différence entre la valeur estimée (aL') et la valeur mesurée (aL) de l'accélération du véhicule est supérieure à une première valeur de seuil prédéterminée (x) et augmente la valeur estimée du coefficient de frottement routier (f'), lorsque la différence entre la valeur estimée (aL') et la valeur mesurée (aL) de l'accélération du véhicule est inférieure à une deuxième valeur de seuil prédéterminée et que la valeur mesurée (aL) de l'accélération du véhicule est supérieure à une troisième valeur de seuil prédéterminée (y),
la deuxième valeur de seuil étant choisie inférieure à la première valeur de seuil (x).

7. Procédé d'estimation d'un coefficient de frottement routier selon la revendication 6, **caractérisé en ce que** le capteur d'accélération (12) mesure au moins l'accélération longitudinale (aL) du véhicule, le dispositif d'estimation d'accélération (17) détermine une valeur estimée pour l'accélération longitudinale (aL') du véhicule, un dispositif d'estimation de vitesse de déplacement (18) est prévu, qui estime une vitesse longitudinale du véhicule (vL') sur la base de la valeur estimée (aL') et/ou de la valeur mesurée (aL) de l'accélération longitudinale du véhicule, et le dispositif de détermination du glissement des pneus (14) détermine le glissement de pneus (sLi) dans la direction longitudinale sur la base de la vitesse longitudinale estimée du véhicule (vL') et des données de mesure (vi) des capteurs de vitesse des roues (19).

8. Procédé d'estimation d'un coefficient de frottement routier selon la revendication 7, **caractérisé en ce que** le dispositif d'estimation de la vitesse du véhicule (18) détermine la vitesse longitudinale du véhicule (vL') sur la base d'une vitesse de roue (vd) moyennée sur les roues du véhicule comme valeur de départ et d'une intégrale de temps sur la valeur estimée (aL') et/ou la valeur mesurée (aL) de l'accélération longitudinale du véhicule.

9. Procédé d'estimation d'un coefficient de frottement routier selon l'une des revendications 6 à 8, **caractérisé en ce que** le dispositif de détermination de charge (13) détermine la charge verticale du pneu (Fzi) pour chaque roue du véhicule individuellement au moyen d'un modèle de véhicule (20) à partir de valeurs de mesure du capteur d'accélération (12) pour l'accélération longitudinale du véhicule (aL) et l'accélération transversale du véhicule (aT).

10. Procédé d'estimation d'un coefficient de frottement routier selon l'une des revendications 6 à 9, **caractérisé en ce que** la valeur estimée pour le coefficient de frottement routier (f') est modifiée proportionnellement à une intégrale de temps sur la différence entre la valeur estimée (aL') et la valeur mesurée (aL) de l'accélération du véhicule.
